(19)

Europäisches
Patentamt
European
Patent Office
Office européen
des brevets

(11) **EP 4 629 141 A1**

(12) **EUROPEAN PATENT APPLICATION**

(43) Date of publication:
**08.10.2025 Bulletin 2025/41**

(21) Application number: **25157168.3**

(22) Date of filing: **11.02.2025**

(51) International Patent Classification (IPC):
**G06N 10/20** (2022.01)    **G06N 10/60** (2022.01)

(52) Cooperative Patent Classification (CPC):
**G06N 10/20; G06N 10/60**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.04.2024 JP 2024060484**

(71) Applicant: **Fujitsu Limited
Kawasaki-shi, Kanagawa 211-8588 (JP)**

(72) Inventor: **CHINZEI, Koki
Kawasaki-shi, 211-8588 (JP)**

(74) Representative: **Haseltine Lake Kempner LLP
Cheapside House
138 Cheapside
London EC2V 6BJ (GB)**

(54) **GENERATION PROGRAM, GENERATION METHOD, AND INFORMATION PROCESSING DEVICE**

(57)    A generation program for causing a computer to execute a process includes determining, when any group operation is performed on each of a plurality of subsets obtained by splitting a collection of qubits, a splitting method such that a configuration of the plurality of subsets is invariant or mutually interchanged in an entire layer that includes the plurality of subsets, determining a unitary operation that satisfies a same transformation rule in the entire layer as a unitary operation that acts on each of the plurality of subsets split by the determined splitting method, and generating a quantum circuit by causing the unitary operation to act on each of the plurality of subsets split by the splitting method.

FIG. 3

INFORMATION PROCESSING DEVICE — S10

START

S1 — PREREQUISITE KNOWLEDGE: SYMMETRY G OF DATA AND TASK

S2 — (FIRST CONDITION) DETERMINE SPLITTING METHOD OF QUANTUM CIRCUIT BASED ON SYMMETRY G

S3 — (SECOND CONDITION) DETERMINE UNITARY OPERATION IN EACH LAYER OF QUANTUM CIRCUIT BASED ON SYMMETRY G AND CIRCUIT SPLITTING METHOD

S4 — PERFORM TRAINING OF TRAINING DATA USING DESIGNED SPLIT-PARALLELIZING QCNN

S5 — PERFORM PREDICTION WITH RESPECT TO UNKNOWN DATA USING TRAINED SPLIT-PARALLELIZING QCNN

END

EP 4 629 141 A1

**Description**

FIELD

The embodiments discussed herein are related to a generation program, a generation method, and an information processing device.

BACKGROUND

A machine learning method using a quantum computer is expected to be applied to various fields, such as quantum physics, finance, and the like, as a method capable of processing a huge data set that may not be handled by a classical computer, which is a common computer currently in widespread use. In particular, a quantum neural network in which a neural network is constructed using a quantum circuit has attracted great expectations as a new technology that may surpass a classical neural network.

In addition, there is a quantum convolutional neural network (QCNN), which is one of quantum neural networks capable of classifying quantum states. The QCNN is an extension of a convolutional neural network (CNN), which is a representative classical machine learning model, to quantum machine learning, and is expected to be capable of processing a large-scale data set as compared with the classical CNN.

citation List

Paten Document

Japanese Laid-open Patent Publication No. 2019-096334
Japanese National Publication of International Patent Application No. 2022-509841
U.S. Patent Application Publication No. 2022/0101164
U.S. Patent Application Publication No. 2022/0253741

SUMMARY OF INVENTION

TECHNICAL PROBLEM

However, the QCNN has a problem that a calculation cost increases as a problem size increases. For example, in training of the QCNN, a large number of variational parameters need to be updated many times with respect to a large number of pieces of training data, which takes a very long time. Furthermore, in the quantum computing, unlike the classical CNN, one quantum circuit needs to be executed multiple times to calculate the average of the measured values to obtain one output. Furthermore, the quantum computer is developing technology, and the calculation cost needs to be minimized to solve a large-scale problem with current limited calculation resources.

In one aspect, an object is to execute a QCNN more efficiently.

SOLUTION TO PROBLEM

According to an aspect of the embodiments, a generation program for causing a computer to execute a process includes determining, when any group operation is performed on each of a plurality of subsets obtained by splitting a collection of qubits, a splitting method such that a configuration of the plurality of subsets is invariant or mutually interchanged in an entire layer that includes the plurality of subsets, determining a unitary operation that satisfies a same transformation rule in the entire layer as a unitary operation that acts on each of the plurality of subsets split by the determined splitting method, and generating a quantum circuit by causing the unitary operation to act on each of the plurality of subsets split by the splitting method.

ADVANTAGEOUS EFFECTS OF INVENTION

According to an embodiment, an object is to execute a QCNN more efficiently.

BRIEF DESCRIPTION OF DRAWINGS

FIG. 1 is a diagram for explaining a QCNN quantum circuit;
FIG. 2 is a diagram for explaining translational symmetrization and splitting of a QCNN;
FIG. 3 is a diagram for explaining an information processing device according to a first embodiment;
FIG. 4 is a functional block diagram illustrating a configuration of the information processing device according to the first embodiment;
FIG. 5 is a diagram for explaining terms and notation used in the present embodiment;
FIG. 6 is a diagram for explaining conditions of a split-parallelizing QCNN to be generated;
FIG. 7 is a diagram for specifically explaining a splitting method satisfying a first condition;
FIG. 8 is a flowchart illustrating a flow of a process of setting circuit splitting (first condition);
FIG. 9 is a diagram for specifically explaining a second condition;
FIG. 10 is a diagram for explaining an example of a twirling technique;
FIG. 11 is a flowchart illustrating a flow of a process of designing a unitary operation (second condition);
FIG. 12 is a diagram for explaining an overall image of a quantum circuit as a specific example;
FIG. 13 is a diagram for explaining whether or not circuit splitting is correct;
FIG. 14 is a diagram for explaining a unitary operation of a first layer;
FIG. 15 is a diagram for explaining a unitary operation of a second layer;
FIG. 16 is a diagram for explaining the unitary operation of the second layer;
FIG. 17 is a diagram for explaining a unitary operation of a third layer;
FIG. 18 is a diagram for explaining the unitary operation of the third layer;
FIG. 19 is a diagram for explaining a unitary operation of a fourth layer;
FIG. 20 is a diagram for explaining the unitary operation of the fourth layer;
FIG. 21 is a diagram for explaining the unitary operation of the fourth layer;
FIG. 22 is a diagram for explaining the unitary operation of the fourth layer;
FIG. 23 is a diagram for explaining a method of determining block diagonalization;
FIG. 24 is a diagram for explaining a verification result;
FIG. 25 is a diagram for explaining the verification result;
FIG. 26 is a diagram for explaining rotational symmetry of a task; and
FIG. 27 is a diagram for explaining an exemplary hardware configuration.

DESCRIPTION OF EMBODIMENTS

Hereinafter, embodiments of a generation program, a generation method, and an information processing device disclosed in the present application will be described in detail with reference to the drawings. Note that the present disclosure is not limited by the embodiments.

[First Embodiment]

(Description of QCNN)

First, a quantum convolutional neural network (QCNN) will be described. The QCNN is an extension of a convolutional neural network (CNN), which is a representative classical machine learning model, to quantum machine learning by making construction using a quantum circuit.

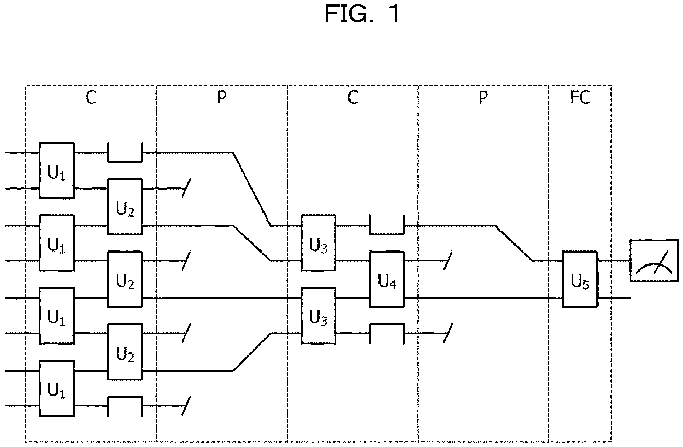

FIG. 1 is a diagram for explaining a QCNN quantum circuit. As illustrated in FIG. 1, the QCNN quantum circuit includes, for example, three layers of a C layer, P layer, and an FC layer. The C layer is, for example, a convolution layer, which is a layer for performing local unitary transformation and extracting a feature. The P layer is, for example, a pooling layer, which is a layer for reducing qubits and roughening a quantum state. The FC layer is, for example, a fully connected layer, which is a layer for performing unitary transformation of combining all the qubits with each other. In the QCNN quantum circuit, for example, convolution and pooling are alternately performed, whereby features of quantum correlation of various length scales may be trained. Furthermore, in the QCNN quantum circuit, for example, the C layer and the P layer are alternately caused to act, and the fully connected layer is caused to act when the number of qubits is sufficiently reduced. Then, a quantum state of the qubit remaining after the fully connected layer acts is measured, and its expected value is set as an output of the QCNN.

Furthermore, the unitary transformation denoted by $U_1$ to $U_5$ in FIG. 1 is trained using training data. The training data includes, for example, a set of a quantum state and a ground truth label, and may be expressed by the following formula (1).
[Math. 1]

$$\{|\phi_i\rangle, y_i\}_{i=1 \sim N_t} \qquad \cdots (1)$$

In the formula (1), for example, Nt represents the number of pieces of training data. Furthermore, a value of the ground truth label corresponds to prediction of the QCNN, and is classified as a cat image when "$y_i = 1$" and as an image other than a cat when "$y_i = 0$" in image recognition, for example. Furthermore, a loss function at the time of training may be expressed by, for example, the following formula (2).
[Math. 2]

$$L(\{\langle Z_1(\theta)\rangle_i\}) = \frac{1}{N_t} \sum_{i=1}^{N_t} (y_i - \langle Z_1(\theta)\rangle_i)^2, \langle Z_1(\theta)\rangle_i = \langle \phi_i | U(\theta)^\dagger Z_1 U(\theta) | \phi_i \rangle \qquad \cdots (2)$$

In the formula (2), for example, $Z_1$ represents a Z operator of the first qubit, which is a physical amount to be measured. Furthermore, for example, $U(\theta)$ represents the entire unitary transformation of the QCNN, and $\theta$ represents a parameter of the unitary transformation. Then, $\theta$ is optimized to minimize the loss function expressed by the formula (2). As a method of optimization, for example, a gradient descent method of optimizing a parameter based on a gradient of a loss function, which is an existing technique, is used. Then, in the optimization of the parameter, for example, a gradient of a quantum computer loss function is calculated, and based on a result thereof, a classical computer updates the parameter. Those processes are alternately repeated many times to optimize parameters. Furthermore, prediction for unknown data is finally performed by the trained QCNN.

While such a QCNN makes it possible to process a large-scale data set as compared with a classical CNN, the QCNN has a problem that a calculation time increases as a problem size increases. In particular, in the training of the QCNN, a large number of variational parameters need to be updated many times with respect to a large number of pieces of training data, which needs a very long processing time. For example, O(n) (n is the number of qubits) is needed as one update time of a parameter per training data. Furthermore, a quantum computer is developing technology, and the calculation cost needs to be minimized to solve a large-scale problem with current limited calculation resources. Furthermore, unlike the classical CNN, quantum computing needs to execute the quantum circuit multiple times and calculate the average of the measured values to obtain one output, and this measurement inefficiency is one of the factors that lower the calculation efficiency of the QCNN.

Meanwhile, as a technique for more efficiently executing the QCNN, for example, a technique is known in which a circuit is split to effectively utilize qubits discarded in the P layer of the existing quantum circuit of the QCNN as illustrated in FIG. 1 so that qubits, which are originally to be discarded, are also caused to perform subsequent calculations in parallel.

As a result, quantum states of many qubits may be measured at a time, which may improve the measurement efficiency of the QCNN, and eventually the execution efficiency. Here, the qubits to be discarded in the P layer are, for example, qubits of a portion where the circuit is not connected to the next C layer and is disconnected in the P layer of the QCNN quantum circuit illustrated in FIG. 1. Furthermore, as illustrated in FIG. 1, only one qubit operated in $U_5$ of the FC layer is measured, and another qubit is discarded. Furthermore, in order to achieve parallel computing by splitting, it is needed to return the same value at all branch destinations when the circuit is split, and accordingly, an operation of translational symmetrization for each layer of the QCNN is needed.

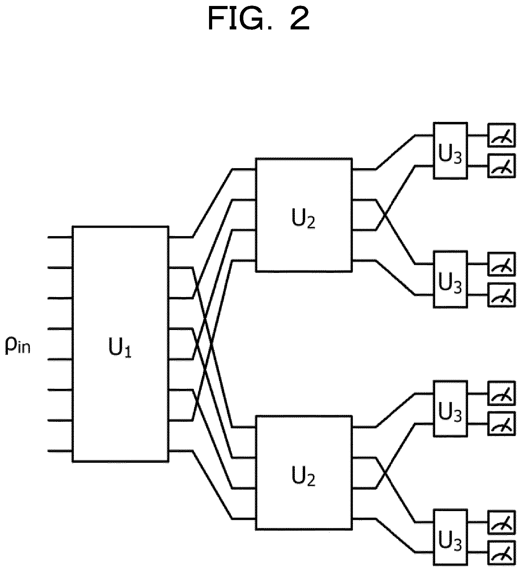

FIG. 2 is a diagram for explaining translational symmetrization and splitting of the QCNN. FIG. 2 illustrates the QCNN quantum circuit split in a translational symmetry manner to effectively utilize qubits that are otherwise discarded. As illustrated in FIG. 2, the circuit is split without discarding each qubit subjected to the operation of the unitary transformation in $U_1$ to $U_3$. At this time, the translational symmetrization is performed on each layer such that the same value is returned at all branch destinations, and the same unitary transformation is applied to each branch after the splitting.

When FIG. 2 is compared with FIG. 1, in FIG. 1, qubits other than the portion of the QCNN originally desired to be calculated are discarded in the pooling layer, and only one of the qubits operated in the fully connected layer is measured and the other is discarded. On the other hand, in FIG. 2, the circuit is split without discarding the qubits other than the portion of the QCNN originally desired to be calculated, and exactly the same operation as the portion of the QCNN originally desired to be calculated is performed on the collection of qubits after the splitting.

In this manner, only a measured value of one qubit of the portion of the QCNN originally desired to be calculated may be obtained in one execution in the existing QCNN quantum circuit, whereas a measured value of eight qubits may be obtained in the split-parallelizing quantum convolutional neural network (split-parallelizing QCNN) in FIG. 2. As a result, the QCNN may be more efficiently executed.

That is, the split-parallelizing QCNN illustrated in FIG.2 is a quantum machine learning model that improves efficiency in calculation by incorporating the translational symmetry of data and tasks into the structure of the quantum circuit in advance. However, this split-parallelizing QCNN may be applied only to translationally symmetric data and tasks, and its application range has been limited. For example, chemical molecules, which are important research subjects in the quantum computing field, do not have the translational symmetry, and thus the split-parallelizing QCNN illustrated in FIG. 2 may not be applied.

In view of the above, in the present embodiment, a generalized circuit configuration method of the split-parallelizing QCNN applicable to data and tasks having any spatial symmetry G is proposed. In the present embodiment, the circuit structure of the proposed split-parallelizing QCNN includes two elements. First, the quantum circuit is split such that division of qubits is invariant for any operation included in the symmetry G (first condition). Second, a unitary operation that acts on each collection of qubits divided by the circuit splitting is constructed such that the entire layer satisfies the symmetry G (second condition). As a result, the split-parallelizing QCNN that keeps the symmetry G as the quantum circuit as a whole may be configured, and the efficiency in calculation and accuracy in training for data and tasks having any spatial symmetry may improve.

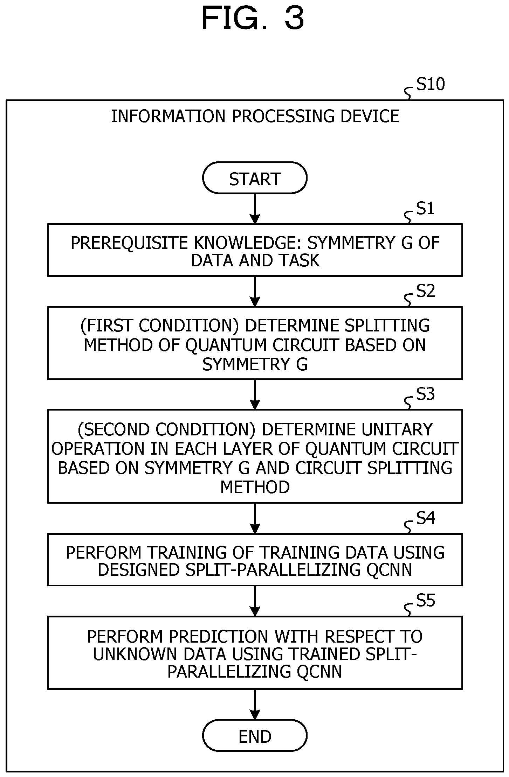

FIG. 3 is a diagram for explaining an information processing device 10 according to the first embodiment. As illustrated in FIG. 3, the information processing device 10 identifies the symmetry G of the data and tasks as confirmation of prerequisite knowledge (S1). For example, it is checked whether or not the quantum state to be input is translationally symmetric, in other words, whether or not the quantum state to be input may return the same value at all branch destinations when the circuit is split. Note that whether or not to be translationally symmetric may be determined using, for example, a Hamiltonian equation, which is an existing algorithm.

Subsequently, the information processing device 10 determines a splitting method of the quantum circuit based on the symmetry G (S2), and determines a unitary operation in each layer of the quantum circuit based on the symmetry G and the circuit splitting method (S3). Note that S2 corresponds to the first condition described above, and S3 corresponds to the second condition described above.

Thereafter, the information processing device 10 carries out training of training data using the split-parallelizing QCNN designed in S1 and S2 (S4), and then carries out prediction with respect to unknown data using the trained split-parallelizing QCNN (S5).

(Functional Configuration)

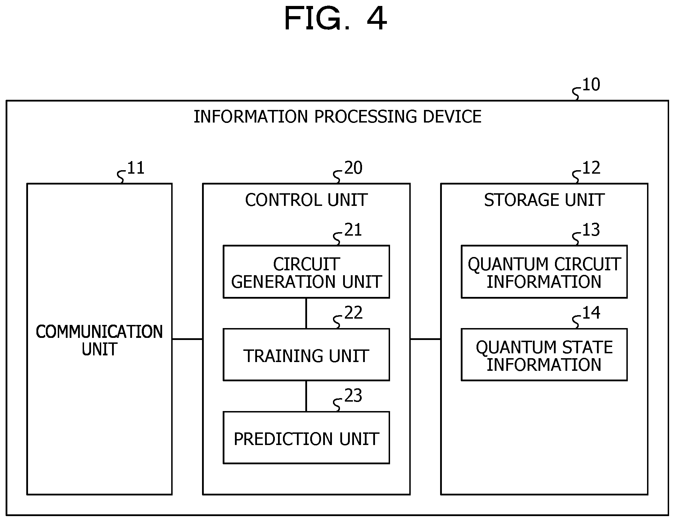

Next, a functional configuration of the information processing device 10 will be described. FIG. 4 is a functional block diagram illustrating a configuration of the information processing device 10 according to the first embodiment. As illustrated in FIG. 4, the information processing device 10 includes a communication unit 11, a storage unit 12, and a control unit 20.

The communication unit 11 is a processing unit that controls communication with another device, and is implemented by, for example, a communication interface or the like. For example, the communication unit 11 receives various types of information, training data, unknown data to be predicted, and the like from a user or another device, and transmits a training result, a prediction result, and the like.

The storage unit 12 is a processing unit that stores training data, unknown data, various types of information, programs to be executed by a processor, and the like, and is implemented by, for example, a memory, a hard disk, or the like. The storage unit 12 stores quantum circuit information 13 and quantum state information 14.

The quantum circuit information 13 stores, for example, information regarding the QCNN quantum circuit and the like. More specifically, the quantum circuit information 13 stores information regarding the split-parallelizing QCNN quantum circuit symmetric with respect to a group G generated by processing of the control unit 20 to be described later.

The quantum state information 14 stores, for example, information regarding a quantum state, which is a state of a qubit in the quantum computer serving as the information processing device 10, and the like. More specifically, the quantum state information 14 stores, for example, information regarding a measured quantum state. Note that the information regarding the measured quantum state may include, in addition to the measured value of the quantum state of the qubit in the final state, an average value of the measured value to be used for an output of the QCNN, a gradient of the calculated output of the QCNN, and the like. Furthermore, the quantum state information 14 may store, for example, information regarding the training data.

Note that the information described above to be stored in the storage unit 12 is merely an example, and the storage unit 12 may store various kinds of information other than the information described above.

The control unit 20 is a processing unit that takes overall control of the information processing device 10, and is implemented by, for example, a processor or the like. The control unit 20 includes a circuit generation unit 21, a training unit 22, and a prediction unit 23. Note that the circuit generation unit 21, the training unit 22, and the prediction unit 23 are implemented by an electronic circuit included in the processor, a process executed by the processor, or the like.

The circuit generation unit 21 is a processing unit that generates a split-parallelizing QCNN quantum circuit that satisfies the first condition and the second condition. Here, an explanation of terms and notation, the respective conditions (first condition and second condition), and specific examples of the respective conditions will be described in order.

(Explanation of Terms and Notation)

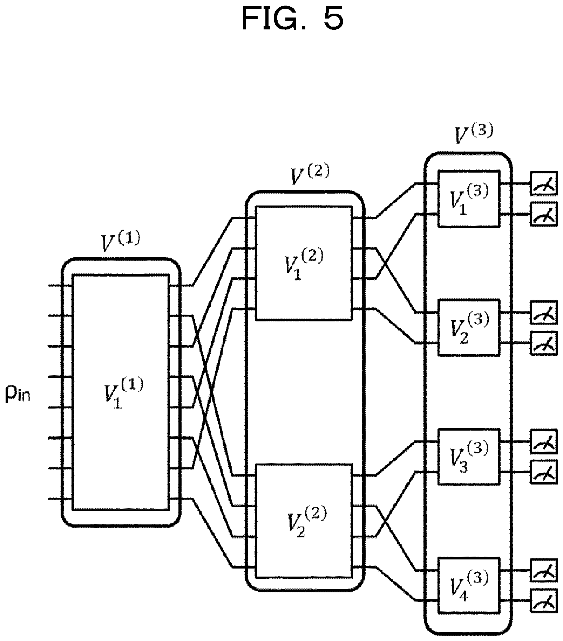

FIG. 5 is a diagram for explaining terms and notation used in the present embodiment. A collection of qubits is expressed as $Q = \{q_1, q_2, ..., q_n\}$. Note that n represents the number of qubits, and $q_i$ represents the i-th number of qubits. In the example of FIG. 5, the collection of qubits in the first layer is expressed as "$Q^{(1)}$", the first collection of qubits in the second layer is expressed as "$Q_1^{(2)}$", and the second collection of qubits in the second layer is expressed as "$Q_2^{(2)}$". Note that the collection of qubits in the second and subsequent layers may be referred to as a branch.

Symmetry is expressed using a group G. A group operation $g \in G$ for a qubit $q \in Q$ acts as bijective mapping of "g: $Q \to Q$". Furthermore, the group operation $g \in G$ for the quantum state is expressed using unitary representation $U_g$.

Furthermore, in the quantum circuit, circuit splitting in the d-th layer is expressed by a formula (3) expressed by direct sum decomposition. Note that $Q_i^{(d)} \subset Q$ represents the i-th branch of the d-th layer. In the example of FIG. 5, branches of the second layer split from the first layer are "$Q_1^{(2)}$" and "$Q_2^{(2)}$". Furthermore, it is assumed that each branch of the d+1-th layer is connected to only one branch of the d-th layer.

[Math. 3]

$$\text{Circuit splitting}: Q = \bigoplus_i Q_i^{(d)} \qquad \cdots (3)$$

Moreover, an operator $V^{(d)}$ that acts on the entire d-th layer is expressed by a formula (4) using an operator $V_i^{(d)}$ that acts only on $Q_i^{(d)}$. In the example of FIG. 5, an operator that acts on the entire first layer to which a quantum state $\rho_{in}$ is input is $V^{(1)}$, and an operator that acts only on the collection $Q_1^{(1)}$ of qubits is $V_1^{(1)}$. Likewise, an operator that acts on the entire second layer is $V^{(2)}$, an operator that acts only on the branch "$Q_1^{(2)}$", which is the first collection of qubits in the second layer, is $V_1^{(2)}$, and an operator that acts only on the branch "$Q_2^{(2)}$", which is the second collection of qubits, is $V_2^{(2)}$.

[Math. 4]

$$\text{Operator } V^{(d)} = \bigotimes_i V_i^{(d)} \qquad \cdots (4)$$

(Explanation of Conditions)

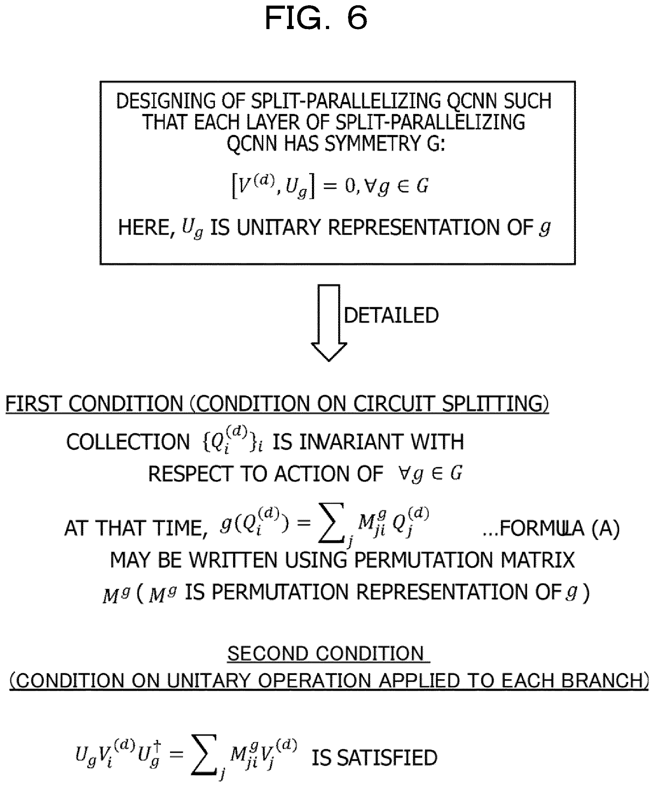

The circuit generation unit 21 carries out design of the split-parallelizing QCNN such that each layer of the split-parallelizing QCNN has the symmetry G. FIG. 6 is a diagram for explaining conditions of a split-parallelizing QCNN to be generated. As illustrated in FIG. 6, a split-parallelizing QCNN that satisfies a formula (5) is designed. Note that $U_g$ is unitary representation of g. When the formula (5) is detailed, it may be broken into the first condition related to circuit splitting and the second condition related to a unitary operation that acts on each branch.

[Math. 5]

$$\left[V^{(d)}, U_g\right] = 0, \forall g \in G \qquad \cdots (5)$$

The first condition is that, when any group operation is performed on each of a plurality of subsets (each branch) obtained by splitting a collection of qubits, a splitting method is determined such that a configuration of the plurality of subsets is invariant or interchanged with each other in the entire layer including the plurality of subsets. In other words, it is that the collection $\{Q_i^{(d)}\}_i$ is invariant with respect to the action of vg $\in$ G. At this time, it may be written as a formula (A) in FIG. 6 using a permutation matrix $M^g$ ($M^g$ represents a permutation matrix of g).

The second condition is that the unitary operation that acts on each of the plurality of subsets (each branch) split by the splitting method determined based on the first condition satisfies the same transformation rule in the entire layer. In other words, it is that a unitary operator that acts on each branch satisfies the same transformation rule as the branch for the symmetric group operation. That is, it is that a formula (6) is satisfied such that the unitary operation satisfies the given symmetry.

[Math. 6]

$$U_g V_i^{(d)} U_g^\dagger = \sum_j M_{ji}^g V_j^{(d)} \qquad \cdots (6)$$

(Specific Example of First Condition)

The circuit generation unit 21 sets a splitting method that satisfies the first condition. First, "the collection $\{Q_i^{(d)}\}_i$ is invariant with respect to the action of vg $\in$ G" in the first condition illustrated in FIG. 6 will be described. For example, as described above, $Q_i^{(d)}$ represents a subset of the collection $Q = \{q_1, q_2, ..., q_n\}$ of all qubits, and the direct sum of $Q_i^{(d)}$ with respect to i is Q. The "collection $\{Q_i^{(d)}\}_i$ is invariant with respect to the action of vg $\in$ G" is synonymous with "$\{Q_i^{(d)}\}_i = \{g(Q_i^{(d)})\}_i$". It is defined as "$g(Q_i^{(d)}) = \{g(q)|q \in Q_i^{(d)}\}$".

That is, it is sufficient if the split circuit configuration has a configuration in which each branch after splitting is invariant or interchanged with each other by any group operation.

Next, "the formula (A) in FIG. 6 may be written using the permutation matrix $M^g$" in the first condition will be description. For example, $M^g$ is obtained by expressing a transformation rule of branch permutation based on g $\in$ G as a matrix, and $M^g$ is a permutation matrix (one component of each row and each column is 1, and the rest are 0) based on a property of splitting, and the dimension is the number of branches.

That is, the (i, j) component of $M^g$ being 1 means that, when g is caused to act on the j-th branch $Q_j$, it is converted in to the i-th branch $Q_i$.

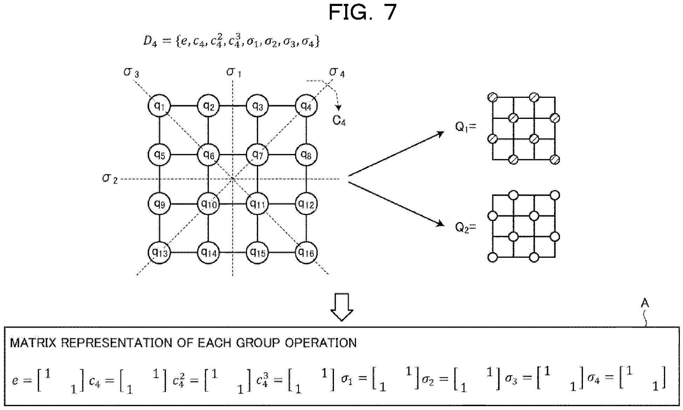

Here, the circuit configuration of the first condition will be specifically described. FIG. 7 is a diagram for specifically explaining the splitting method satisfying the first condition. In FIG. 7, an exemplary case will be described in which 16 qubits are arranged in a square lattice and a split-parallelizing QCNN having symmetry $D_4 = \{e, c_4, c_4^2, c_4^3, \sigma_1, \sigma_2, \sigma_3, \sigma_4\}$ is configured. Note that e indicates that no operation is performed, $c_4^x$ indicates an operation of rotating clockwise (90 $\times$ x), and $\sigma_i$ indicates an operation of reversing around an axis. Furthermore, the 16 qubits are denoted by $q_1$ to $q_{16}$ from the upper left.

In such a state, it is assumed that $Q = \{q_1, ..., q_{16}\}$ is split into two branches of $Q_1 = \{q_1, q_3, q_6, q_8, q_9, q_{11}, q_{14}, q_{16}\}$ and $Q_2 = \{q_2, q_4, q_5, q_7, q_{10}, q_{12}, q_{13}, q_{15}\}$. A matrix (permutation matrix) expressing the transformation into the branch by each group operation in this splitting is A in FIG. 7.

The matrix operation of A in FIG. 7 expresses the following. For example, the branch does not change when the operation e is performed. Furthermore, when the operation $c_4$ for rotating 90 degrees is performed, "(1, 1) component = 0, (1, 2) component = 1, (2, 1) component = 1, and (2, 2) component = 0" holds, and thus $Q_1$ and $Q_2$ are interchanged. Furthermore, $Q_1$ and $Q_2$ do not change even when the operation $c_4^2$ for rotating 180 degrees is performed, and $Q_1$ and $Q_2$ are interchanged when the operation $c_4^3$ for rotating 270 degrees is performed. Furthermore, $Q_1$ and $Q_2$ are interchanged when the operation $\sigma_1$ or the operation $\sigma_2$ is performed, and $Q_1$ and $Q_2$ do not change even when the operation $\sigma_3$ or the operation $\sigma_4$ is performed.

In other words, this splitting is invariant with respect to the action of vg $\in$ G. For example, when $\sigma_1$ is caused to act, while $\sigma_1(Q_1) = Q_2$ and $\sigma_1(Q_2) = Q_1$ hold so that $Q_1$ and $Q_2$ are interchanged, a manner of splitting is invariant.

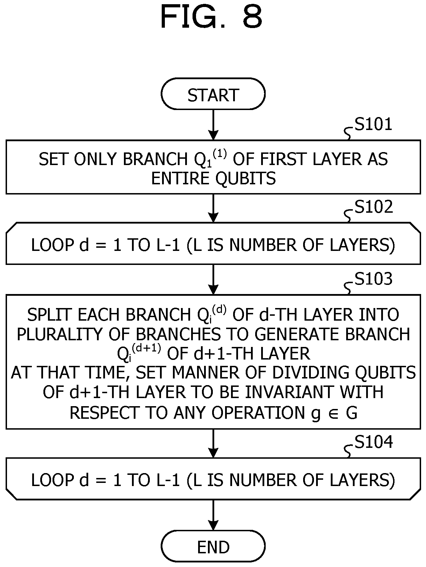

Next, a flow of the process described above will be described using a flowchart. FIG. 8 is a flowchart illustrating a flow of the process of setting circuit splitting (first condition). As illustrated in FIG. 8, the circuit generation unit 21 sets the only branch $Q_1^{(1)}$ of the first layer as the entire qubits (S101), and performs a loop process S102 to S104 with a loop d = 1 to L-1 (L is the number of layers). Specifically, the circuit generation unit 21 splits each branch $Q_i^{(d)}$ of the d-th layer into a plurality of branches to generate a branch $Q_i^{(d+1)}$ of the d+1-th layer, and at that time, sets a manner of dividing qubits of the d+1-th layer to be invariant with respect to any operation g $\in$ G (S103).

(Specific Example of Second Condition)

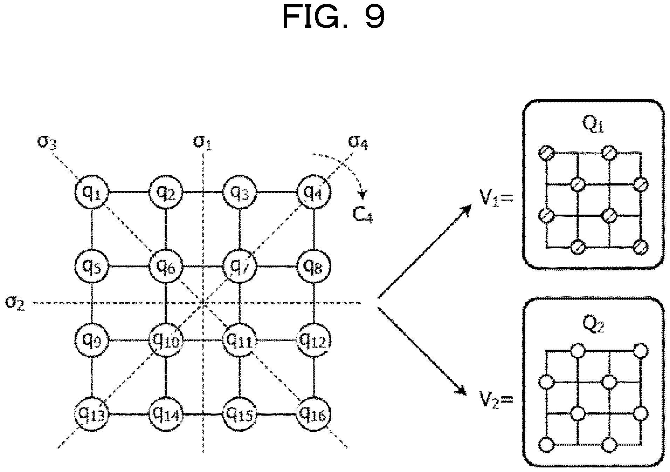

The circuit generation unit 21 sets a unitary operation that acts on each branch for the branch determined by the splitting method satisfying the first condition. FIG. 9 is a diagram for specifically explaining the second condition. In the specific example illustrated in FIG. 7, the unitary operators that act on $Q_1$ and $Q_2$ are assumed to be $V_1$ and $V_2$, respectively. The target here is to set $V_1$ and $V_2$ that satisfy a formula (7).
[Math. 7]

$$U_g(V_1 \otimes V_2)U_g^\dagger = V_1 \otimes V_2 \qquad \cdots (7)$$

For example, focusing on $g = \sigma_1$, $\sigma_1(Q_1) = Q_2$ and $\sigma_1(Q_2) = Q_1$ hold, and thus two formulae of formulae (8) need to be satisfied. In other words, the transformation rule g of the branch needs to match the transformation rule of V. When those conditional expressions are collectively expressed, the formula (6) mentioned above is obtained.

[Math. 8]

$$U_{\sigma_1} V_1 U_{\sigma_1}^\dagger = V_2 , \quad U_{\sigma_1} V_2 U_{\sigma_1}^\dagger = V_1 \qquad \cdots (8)$$

Here, an implementation procedure to be executed by the circuit generation unit 21 will be specifically described. First, block diagonalization of $M^g$ is executed for all $g \in G$ by interchanging the order of the branch $Q_i^{(d)}$. Here, it is assumed that $M^g$ satisfies a formula (9), $M^{(g,b)}$ represents the b-th block matrix, $d_b$ represents a dimension of $M^{(g,b)}$, and B represents the number of blocks. The circuit generation unit 21 executes the following operation for each block.

[Math. 9]

$$M^g = M^{(g,1)} \oplus \cdots \oplus M^{(g,B)} \qquad \cdots (9)$$

Specifically, the unitary operator that acts on the branch corresponding to the i-th basis of the block $M^{(g,b)}$ is set again as ""$V_i^{(d,b)}$" (i = 1, ..., $d_b$). Next, all pieces of g in which the (1, 1) component of the block $M^{(g,b)}$ is 1 are retrieved, and symmetry G' = {g $\in$ G|$(M^{(g,b)})_{11}$ = 1} is defined using those pieces of g. From the above, a first conditional expression "$U_g V_1^{(d,b)} U_g^\dagger = V_1^{(d,b)}$, vg $\in$ G'" is obtained.

Subsequently, using a twirling technique or the like, the unitary operator $V_1^{(d,b)}$ that acts on the first basis of the block $M^{(g,b)}$ is designed to have the symmetry G' based on the first conditional expression. Next, one g in which the (j, 1) component of the block $M^{(g,b)}$ is 1 is retrieved for each of "j = 2, ..., $d_b$", and is set as "$g_j$". From the above, a second conditional expression "$U_{gj} V_1^{(d,b)} U_{gj}^\dagger = V_j^{(d,b)}$" is obtained.

Then, the unitary operator $V_j^{(d,b)}$ that acts on the j-th basis of the block $M^{(g,b)}$ is defined by "$V_j^{(d,b)} = U_{gj} V_1^{(d,b)} U_{gj}^\dagger$" based on the second conditional expression.

Here, it will be proved that $V_i^{(d)}$ generated by the process described above satisfies the formula (6). Specifically, only a certain block will be focused on and proved. For example, any conditional expression "$U_g V_i^{(d)} U_g^\dagger = V_j^{(d)}$" in the formula (6) will be considered. Any conditional expression "$U_g V_i^{(d)} U_g^\dagger = V_j^{(d)}$" may be rewritten into an expression "$U_g V_1^{(d)} U_g^\dagger = V_1^{(d)}$" with only $V_1^{(d)}$ based on the second conditional expression. Then, according to the configuration method of the first conditional expression, the rewritten expression described above is inevitably included in the first conditional expression. Therefore, it may be proved that the formula (6) may be derived from the first conditional expression and the second conditional expression.

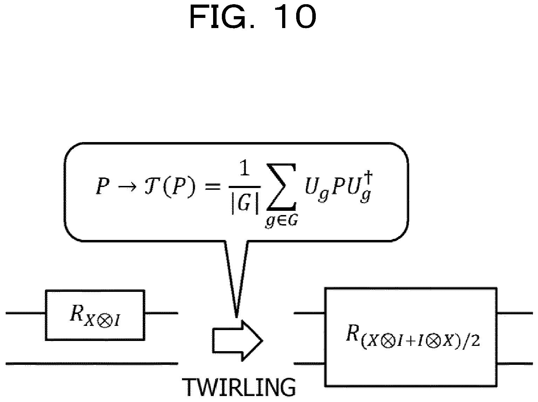

Note that the twirling technique to be used at the time of designing the unitary operator $V_1^{(d,b)}$ described above to have the symmetry G' will be briefly described. FIG. 10 is a diagram for explaining an example of the twirling technique. As illustrated in FIG. 10, the twirling technique is an example of a method of changing a certain gate P to satisfy the symmetry G. While the gate P generally does not satisfy the symmetry G, T(P) satisfies the symmetry G.

For example, the symmetry G will be considered in which two qubits are interchanged in a two-qubit system. At that time, G = {e, SWAP} holds (e represents an identity operation, and SWAP represents an operation of interchanging two qubits). At that time, while P = (X $\times$ I) does not satisfy the symmetry G, T(P) = (X $\times$ I + I $\times$ X)/2 satisfies the symmetry G. Note that "$\times$" here indicates a tensor operation.

That is, by using the twirling technique described above, each branch of the split-parallelizing QCNN may be constructed to satisfy the symmetry G'.

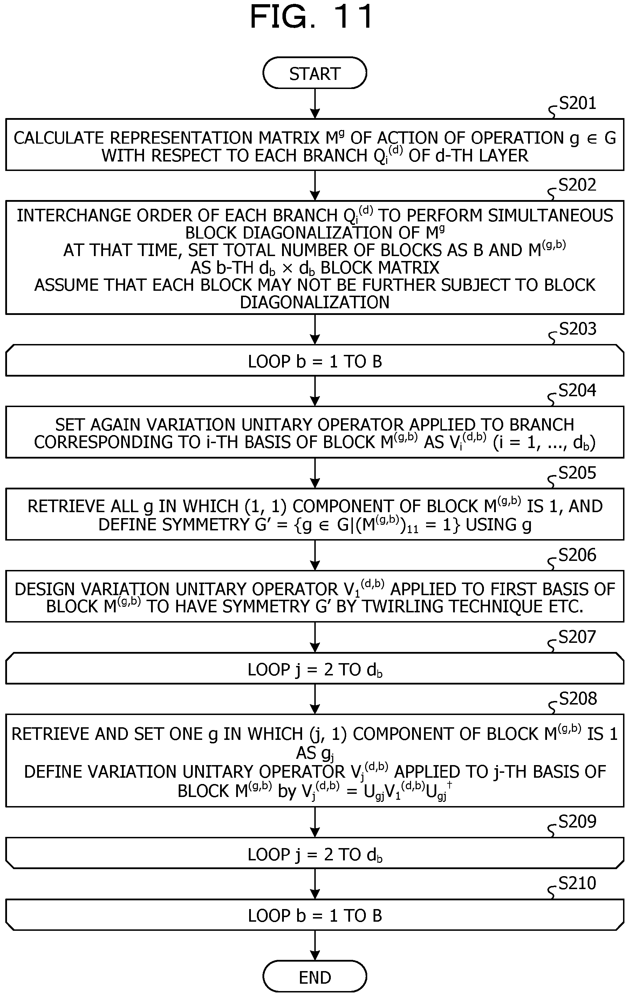

Next, a flow of the process described above will be described using a flowchart. FIG. 11 is a flowchart illustrating a flow of the process of designing the unitary operation (second condition). As illustrated in FIG. 11, the circuit generation unit 21 calculates a representation matrix $M^g$ of the action of the operation g $\in$ G with respect to each branch $Q_i^{(d)}$ of the d-th layer (S201).

Subsequently, the circuit generation unit 21 executes S202. Specifically, the circuit generation unit 21 interchanges the order of each branch $Q_i^{(d)}$ to perform simultaneous block diagonalization of $M^g$. At that time, the circuit generation unit 21 sets the total number of blocks as B and $M^{(g,b)}$ as the b-th $d_b \times d_b$ block matrix, and it is assumed that each block may not be further subject to the block diagonalization.

Thereafter, the circuit generation unit 21 executes a loop process of S203 to S210 (loop b = 1 to B). Specifically, the circuit generation unit 21 sets again a variational unitary operator that acts on the branch corresponding to the i-th basis of the block $M^{(g,b)}$ as $V_i^{(d,b)}$ (i = 1, ..., $d_b$) (S204). Subsequently, the circuit generation unit 21 retrieves all pieces of g in which the (1, 1) component of the block $M^{(g,b)}$ is 1, and defines the symmetry G' = {g $\in$ G|$(M^{(g,b)})_{11}$ = 1} using those pieces of g (S205). Thereafter, using the twirling technique or the like, the circuit generation unit 21 designs the variational unitary

operator $V_1^{(d,b)}$ that acts on the first basis of the block $M^{(g,b)}$ to have the symmetry G' (S206).

Subsequently, the circuit generation unit 21 executes a loop process of S207 to S209 (loop j = 2 to $d_b$). Specifically, the circuit generation unit 21 retrieves and sets one g in which the (j, 1) component of the block $M^{(g,b)}$ is 1 as "$g_j$", and defines the variational unitary operator $V_j^{(d,b)}$ that acts on the j-th basis of the block $M^{(g,b)}$ by "$V_j^{(d,b)} = U_{gj}V_1^{(d,b)}U_{gj}^\dagger$" (S208).

Returning to FIG. 4, the training unit 22 is a processing unit that carries out machine learning of the quantum circuit (split-parallelizing QCNN) designed and generated by the circuit generation unit 21 using the training data and generates a trained split-parallelizing QCNN. Note that, as a method of training, a method similar to machine learning for the quantum circuit in FIG. 2, machine learning for the QCNN, or the like may be used.

The prediction unit 23 is a processing unit that carries out prediction using the trained split-parallelizing QCNN trained by the training unit 22. For example, the prediction unit 23 inputs a quantum state of a plurality of qubits, which is unknown data, to the trained split-parallelizing QCNN, and obtains and outputs a prediction result based on an output result from the trained split-parallelizing QCNN.

(Specific Examples)

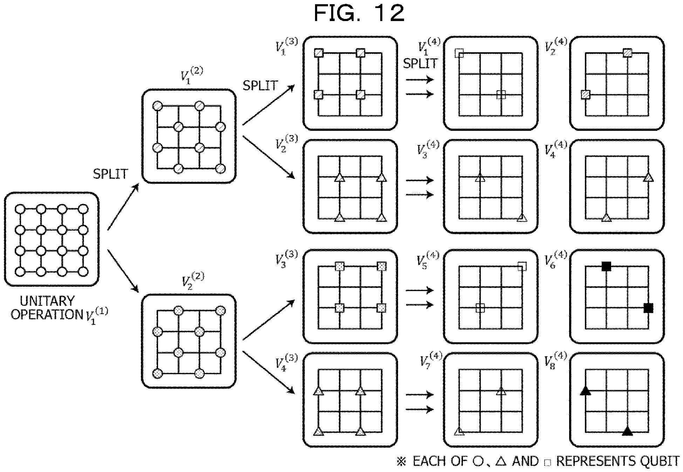

Next, a specific example of the circuit design described above will be described with reference to FIGs. 12 to 21. Here, as an example of problem setting, a design method of the split-parallelizing QCNN, which satisfies the first condition and the second condition and has $D_4$ symmetry with respect to the system in which the 16 qubits illustrated in FIG. 7 are arranged in the 4 × 4 square lattice, will be specifically described.

FIG. 12 is a diagram for explaining an overall image of the quantum circuit as a specific example. Each of circles, triangles, and squares illustrated in FIG. 12 represents a qubit. Here, it will be described that the split-parallelizing QCNN illustrated in FIG. 12 is generated by the circuit design carried out by the circuit generation unit 21 described above and the generated split-parallelizing QCNN satisfies the first condition and the second condition.

As illustrated in FIG. 12, the collection $Q^{(1)}$ of the qubits in the first layer is subject to the unitary operation $V_1^{(1)}$ to be split into the branches "$Q_1^{(2)}$ and $Q_2^{(2)}$" in the second layer, and the unitary operations $V_1^{(2)}$ and $V_2^{(2)}$ are performed on the branch $Q_1^{(2)}$ and the branch $Q_2^{(2)}$, respectively. The branch $Q_1^{(2)}$ in the second layer is split into the branches "$Q_1^{(3)}$ and $Q_2^{(3)}$" in the third layer, the branch $Q_2^{(2)}$ is split into the branches "$Q_3^{(3)}$ and $Q_4^{(3)}$" in the third layer, and the unitary operations $V_1^{(3)}, V_2^{(3)}, V_3^{(3)},$ and $V_4^{(3)}$ are performed on the individual branches "$Q_1^{(3)}, Q_2^{(3)}, Q_3^{(3)},$ and $Q_4^{(3)}$" in the third layer, respectively.

Furthermore, the branch $Q_1^{(3)}$ in the third layer is split into the branches "$Q_1^{(4)}$ and $Q_2^{(4)}$" in the fourth layer, the branch $Q_2^{(3)}$ is split into the branches "$Q_3^{(4)}$ and $Q_4^{(4)}$" in the fourth layer, the branch $Q_3^{(3)}$ in the third layer is split into the branches "$Q_5^{(4)}$ and $Q_6^{(4)}$" in the fourth layer, and the branch $Q_4^{(3)}$ is split into the branches "$Q_7^{(4)}$ and $Q_8^{(4)}$" in the fourth layer. Then, the unitary operations $V_1^{(4)}, V_2^{(4)}, V_3^{(4)}, V_4^{(4)}, V_5^{(4)}, V_6^{(4)}, V_7^{(4)},$ and $V_8^{(4)}$ are performed on the individual branches "$Q_1^{(4)}, Q_2^{(4)}, Q_3^{(4)}, Q_4^{(4)}, Q_5^{(4)}, Q_6^{(4)}, Q_7^{(4)},$ and $Q_8^{(4)}$" in the fourth layer, respectively.

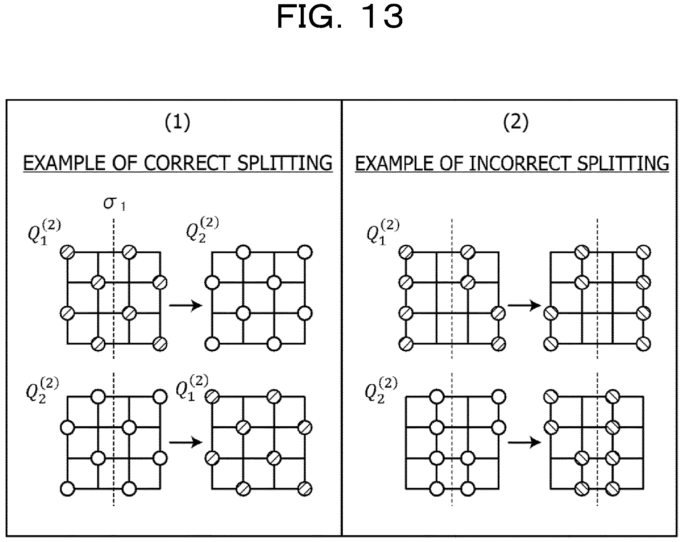

First, with regard to the splitting method as the first condition, the splitting illustrated in FIG. 12 satisfies the properties (first condition and second condition) to be satisfied by the split-parallelizing QCNN in each layer. Specifically, even when the operation of vg $\in D_4$ is performed in each layer (first condition), the method of dividing the qubits based on splitting is not changed. FIG. 13 is a diagram for explaining whether or not the circuit splitting is correct. For example, when the second layer is described as an example, $\sigma_1(Q_1^{(2)}) = Q_2^{(2)}$ and $\sigma_1(Q_2^{(2)}) = Q_1^{(2)}$ hold when the operation $\sigma_1 \in D_4$ for rotating about the axis is applied as illustrated in FIG. 13. That is, as illustrated in (1) of FIG. 13, even when inversion is carried out, only the two branches are interchanged and the manner of splitting is invariant. Note that, in the case of the splitting illustrated in (2) of FIG. 13, for example, the manner of splitting changes when the inversion is carried out, which leads to incorrect splitting.

Next, with regard to the setting of the unitary operation in each layer, the property will be described in which the unitary operator $V_i^{(d)}$ that acts on the i-th branch in the d-th layer satisfies the second condition.

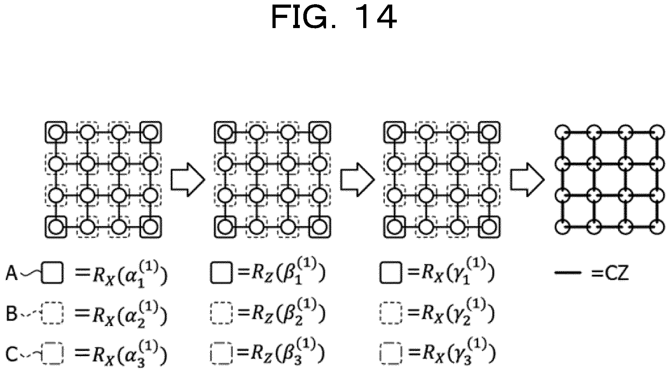

FIG. 14 is a diagram for explaining the unitary operation of the first layer. Since there is only one branch in the first layer, the operator $V_1^{(1)}$ that acts on the branch needs to have the symmetry $D_4$, and may be configured using, for example, the twirling technique or the like. For example, as illustrated in FIG. 14, each of qubits A, qubits B, and qubits C is rotated around the X-axis by an X rotation gate at the same rotation angle (same rotation angle for A, same rotation angle for B, and same rotation angle for C), rotated around the Z-axis by a Z rotation gate, and further rotated around the X-axis by the X rotation gate, and then a control Z (CZ) gate is caused to act to connect adjacent qubits. Since such a series of operations satisfies the same transformation rule in the entire layer, it is a specific example satisfying the symmetry $D_4$. Note that the rotation angle is a parameter to be optimized.

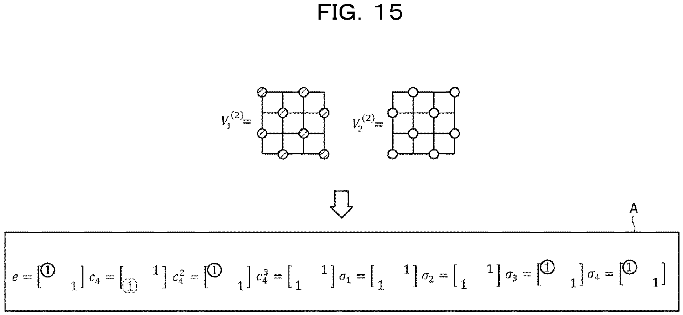

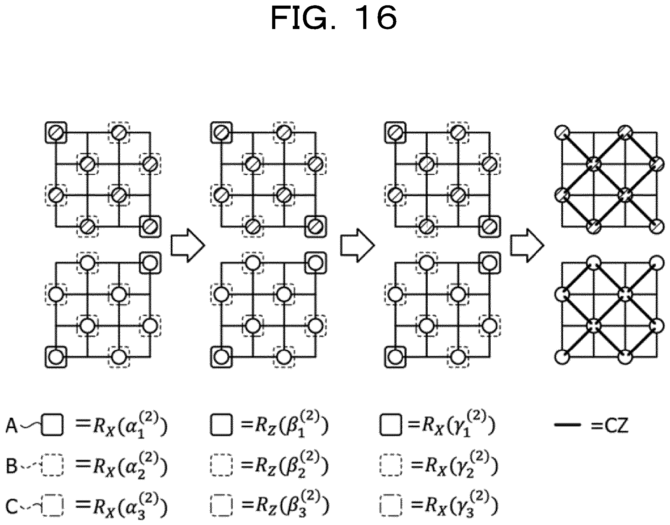

Next, the unitary operation of the second layer will be described. FIGs. 15 and 16 are diagrams for explaining the unitary operation of the second layer. As illustrated in FIG. 15, the unitary operators applied to the branch $Q_1^{(2)}$ and the branch $Q_2^{(2)}$ in the second layer are set as $V_1^{(2)}$ and $V_2^{(2)}$, respectively.

Here, representation of g $\in$ G for the bases $V_1^{(2)}$ and $V_2^{(2)}$ is written (see A of FIG. 15) to obtain the first conditional expression and the second conditional expression. For example, all the matrices (e, $c_4^2$, $\sigma_3$, $\sigma_4$) in which the (1, 1) component is 1 are extracted from the permutation matrix of {e, $c_4$, $c_4^2$, $c_4^3$, $\sigma_1$, $\sigma_2$, $\sigma_3$, $\sigma_4$} illustrated in A of FIG. 15, and the first conditional expression "e($V_1^{(2)}$) = $c_4^2$($V_1^{(2)}$) = $\sigma_3$($V_1^{(2)}$) = $\sigma_4$($V_1^{(2)}$) = $V_1^{(2)}$" is generated. That is, the first conditional expression indicates that $V_1^{(2)}$ is obtained when any operation of the operation e, operation $c_4^2$, operation $\sigma_3$, or operation $\sigma_4$ is performed on $V_1^{(2)}$. As a result, $V_1^{(2)}$ is designed to have symmetry {e, $c_4^2$, $\sigma_3$, $\sigma_4$}. Note that each matrix illustrated in A of FIG. 15 is already block-diagonalized.

In this manner, after $V_1^{(2)}$ having the symmetry {e, $c_4^2$, $\sigma_3$, $\sigma_4$} is determined, one matrix ($c_4$) in which the (1, 2) component is 1 is extracted from the permutation matrix of {e, $c_4$, $c_4^2$, $c_4^3$, $\sigma_1$, $\sigma_2$, $\sigma_3$, $\sigma_4$} illustrated in A of FIG. 15, and the second conditional expression "$c_4^2$ ($V_1^{(2)}$) = $V_2^{(2)}$" is generated. That is, the second conditional expression indicates that $V_2^{(2)}$ is obtained when the operation $c_4$ is performed on $V_1^{(2)}$. As a result, $V_2^{(2)}$ may be designed from $V_1^{(2)}$ by using the second conditional expression.

The unitary operation satisfying those conditional expressions is illustrated in FIG. 16. For example, as illustrated in FIG. 16, with respect to each of the branch $Q_1^{(2)}$ and the branch $Q_2^{(2)}$ in the second layer, each of the qubits A, qubits B, and qubits C is rotated around the X-axis by the X rotation gate at the same rotation angle, rotated around the Z-axis by the Z rotation gate, and further rotated around the X-axis by the X rotation gate, and then the control Z (CZ) gate is caused to act to connect adjacent qubits. Since such a series of operations satisfies the same transformation rule in the entire layer, it is a specific example satisfying the symmetry $D_4$.

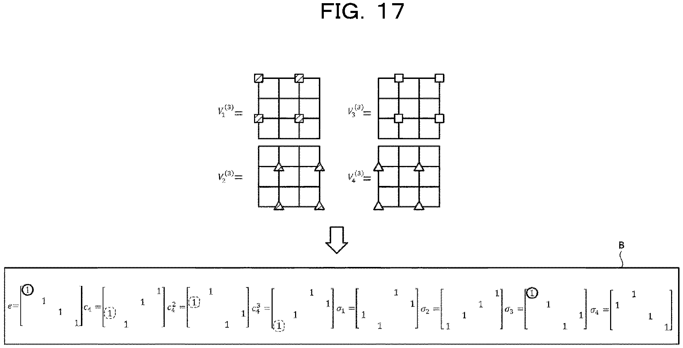

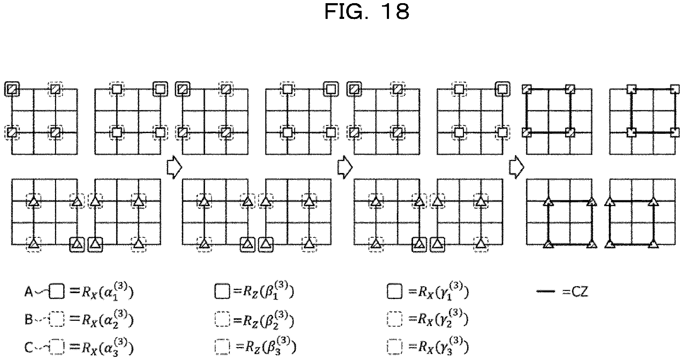

Next, the unitary operation of the third layer will be described. FIGs. 17 and 18 are diagrams for explaining the unitary operation of the third layer. As illustrated in FIG. 17, the unitary operators applied to the branch $Q_1^{(3)}$, the branch $Q_2^{(3)}$, the branch $Q_3^{(3)}$, and the branch $Q_4^{(3)}$ in the third layer are set as $V_1^{(3)}$, $V_2^{(3)}$, $V_3^{(3)}$, and $V_4^{(3)}$, respectively.

Here, representation of g ∈ G for the bases $V_1^{(3)}$, $V_2^{(3)}$, $V_3^{(3)}$, and $V_4^{(3)}$ is written (see B of FIG. 17) to obtain the first conditional expression and the second conditional expression. For example, all the matrices (e, $\sigma_3$) in which the (1, 1) component is 1 are extracted from the permutation matrix of {e, $c_4$, $c_4^2$, $c_4^3$, $\sigma_1$, $\sigma_2$, $\sigma_3$, $\sigma_4$} illustrated in B of FIG. 17, and the first conditional expression "e($V_1^{(3)}$) = $\sigma_3$($V_1^{(3)}$) = $V_1^{(3)}$" is generated. That is, the first conditional expression indicates that $V_1^{(3)}$ is obtained when the operation e or the operation $\sigma_3$ is performed on $V_1^{(3)}$. As a result, $V_1^{(3)}$ is designed to have symmetry {e, $\sigma_3$}. Note that each matrix illustrated in B of FIG. 17 is already block-diagonalized.

In this manner, after $V_1^{(3)}$ having the symmetry {e, $\sigma_3$} is determined, one matrix ($c_4^2$) in which the (1, 2) component is 1, one matrix ($c_4$) in which the (1, 3) component is 1, and one matrix ($c_4^3$) in which the (1, 4) component is 1 are extracted from the permutation matrix of {e, $c_4$, $c_4^2$, $c_4^3$, $\sigma_1$, $\sigma_2$, $\sigma_3$, $\sigma_4$} illustrated in B of FIG. 17. Then, the second conditional expression "$c_4^2$($V_1^{(3)}$) = $V_2^{(3)}$, $c_4$($V_1^{(3)}$) = $V_3^{(3)}$, and $c_4^3$($V_1^{(3)}$) = $V_4^{(3)}$" is generated. That is, the second conditional expression indicates that $V_2^{(3)}$ is obtained when the operation $c_4^2$ is performed on $V_1^{(3)}$, $V_3^{(3)}$ is obtained when the operation $c_4$ is performed on $V_1^{(3)}$, and $V_4^{(3)}$ is obtained when the operation $c_4^3$ is performed on $V_1^{(3)}$. As a result, $V_2^{(3)}$, $V_3^{(3)}$, and $V_4^{(3)}$ may be designed from $V_1^{(3)}$ by using the second conditional expression.

The unitary operation satisfying those conditional expressions is illustrated in FIG. 18. For example, as illustrated in FIG. 18, with respect to each of the branch $Q_1^{(3)}$, the branch $Q_2^{(3)}$, the branch $Q_3^{(3)}$, and the branch $Q_4^{(3)}$ in the third layer, each of the qubits A, qubits B, and qubits C is rotated around the X-axis by the X rotation gate at the same rotation angle, rotated around the Z-axis by the Z rotation gate, and further rotated around the X-axis by the X rotation gate, and then the control Z (CZ) gate is caused to act to connect adjacent qubits. Since such a series of operations satisfies the same transformation rule in the entire layer, it is a specific example satisfying the symmetry $D_4$.

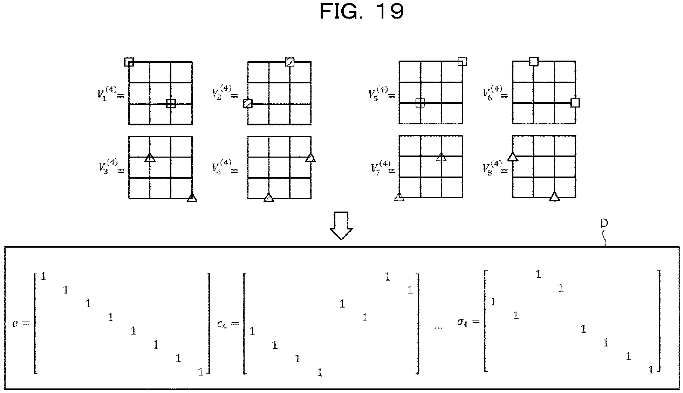

Next, the unitary operation of the fourth layer will be described. FIGs. 19, 20, 21, and 22 are diagrams for explaining the unitary operation of the fourth layer. As illustrated in FIG. 19, the unitary operators applied to the branch $Q_1^{(4)}$, the branch $Q_2^{(4)}$, the branch $Q_3^{(4)}$, the branch $Q_4^{(4)}$, the branch $Q_5^{(4)}$, the branch $Q_6^{(4)}$, the branch $Q_7^{(4)}$, and the branch $Q_8^{(4)}$ in the fourth layer are set as $V_1^{(4)}$, $V_2^{(4)}$, $V_3^{(4)}$, $V_4^{(4)}$, $V_5^{(4)}$, $V_6^{(4)}$, $V_7^{(4)}$, and $V_8^{(4)}$, respectively.

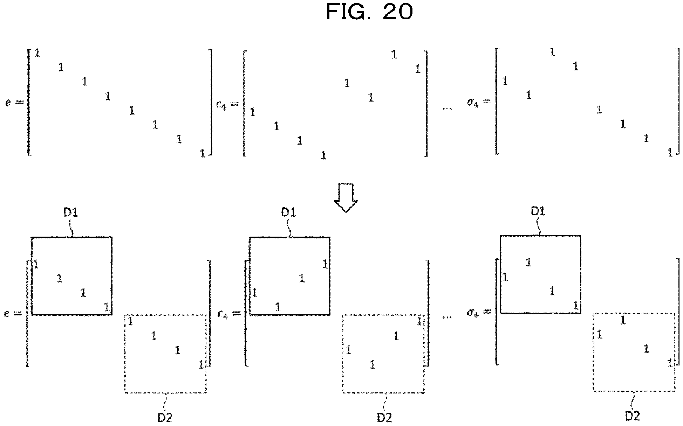

Here, representation of g ∈ G for the bases $V_1^{(4)}$ to $V_8^{(4)}$ is written (see D of FIG. 19), and block diagonalization is carried out. Specifically, as illustrated in FIG. 20, the order of the bases is changed to $V_1^{(4)}$, $V_3^{(4)}$ $V_5^{(4)}$, $V_7^{(4)}$, $V_2^{(4)}$, $V_4^{(4)}$, $V_6^{(4)}$, and $V_8^{(4)}$ with respect to the permutation matrix of {e, $c_4$, $c_4^2$, $c_4^3$, $\sigma_1$, $\sigma_2$, $\sigma_3$, $\sigma_4$} illustrated in D of FIG. 19, and the block diagonalization for grouping into a block group D1 and a block group D2 is carried out.

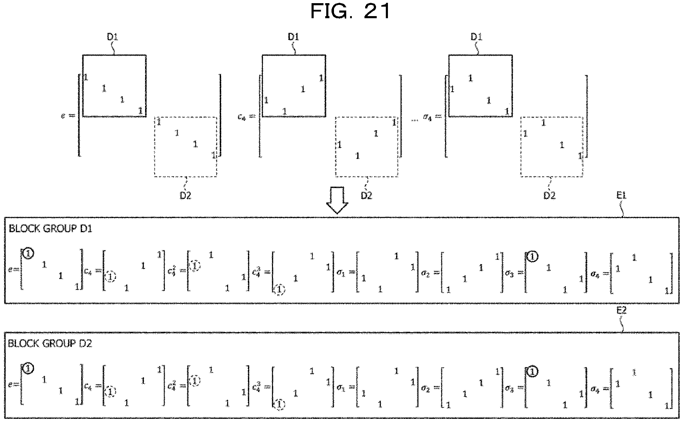

Then, for the block group D1, representation of g ∈ G for the bases $V_1^{(4)}$, $V_3^{(4)}$, $V_5^{(4)}$, and $V_7^{(4)}$ is written (see E1 of FIG. 21) to obtain the first conditional expression and the second conditional expression. For example, all the matrices (e, $\sigma_3$) in which the (1, 1) component is 1 are extracted from the permutation matrix of {e, $c_4$, $c_4^2$, $c_4^3$, $\sigma_1$, $\sigma_2$, $\sigma_3$, $\sigma_4$} illustrated in E1 of FIG. 21, and the first conditional expression "e($V_1^{(4)}$) = $\sigma_3$($V_1^{(4)}$) = $V_1^{(4)}$" is generated. That is, the first conditional expression indicates that $V_1^{(4)}$ is obtained when the operation e or the operation $\sigma_3$ is performed on $V_1^{(4)}$. As a result, $V_1^{(4)}$ is designed to have the symmetry {e, $\sigma_3$}.

In this manner, after $V_1^{(4)}$ having the symmetry {e, $\sigma_3$} is determined, one matrix ($c_4^2$) in which the (1, 2) component is 1, one matrix ($c_4$) in which the (1, 3) component is 1, and one matrix ($c_4^3$) in which the (1, 4) component is 1 are extracted from the permutation matrix of {e, $c_4$, $c_4^2$, $c_4^3$, $\sigma_1$, $\sigma_2$, $\sigma_3$, $\sigma_4$} illustrated in E1 of FIG. 21. Then, the second conditional expression "$c_4^2$($V_1^{(4)}$) = $V_3^{(4)}$, $c_4$($V_1^{(4)}$) = $V_5^{(4)}$, and $c_4^3$($V_1^{(4)}$) = $V_7^{(4)}$" is generated. That is, the second conditional expression indicates that $V_3^{(4)}$ is obtained when the operation $c_4^2$ is performed on $V_1^{(4)}$, $V_8^{(4)}$ is obtained when

the operation $c_4$ is performed on $V_1^{(4)}$, and $V_7^{(4)}$ is obtained when the operation $c_4^3$ is performed on $V_1^{(4)}$. As a result, $V_3^{(4)}$, $V_5^{(4)}$, and $V_7^{(4)}$ may be designed from $V_1^{(4)}$ by using the second conditional expression.

Likewise, for the block group D2, representation of $g \in G$ for the bases $V_2^{(4)}$, $V_4^{(4)}$, $V_6^{(4)}$, and $V_8^{(4)}$ is written (see E2 of FIG. 21) to obtain the first conditional expression and the second conditional expression. For example, all the matrices $(e, \sigma_3)$ in which the $(1, 1)$ component is 1 are extracted from the permutation matrix of $\{e, c_4, c_4^2, c_4^3, \sigma_1, \sigma_2, \sigma_3, \sigma_4\}$ illustrated in E2 of FIG. 21, and the first conditional expression "$e(V_2^{(4)}) = \sigma_3(V_2^{(4)}) = V_2^{(4)}$" is generated. That is, the first conditional expression indicates that $V_2^{(4)}$ is obtained when the operation e or the operation $\sigma_3$ is performed on $V_2^{(4)}$. As a result, $V_2^{(4)}$ is designed to have the symmetry $\{e, \sigma_3\}$.

In this manner, after $V_2^{(4)}$ having the symmetry $\{e, \sigma_3\}$ is determined, one matrix $(c_4^2)$ in which the $(1, 2)$ component is 1, one matrix $(c_4)$ in which the $(1, 3)$ component is 1, and one matrix $(c_4^3)$ in which the $(1, 4)$ component is 1 are extracted from the permutation matrix of $\{e, c_4, c_4^2, c_4^3, \sigma_1, \sigma_2, \sigma_3, \sigma_4\}$ illustrated in E2 of FIG. 21. Then, the second conditional expression "$c_4^2(V_2^{(4)}) = V_4^{(4)}$, $c_4(V_2^{(4)}) = V_6^{(4)}$, and $c_4^3(V_2^{(4)}) = V_8^{(4)}$" is generated. That is, the second conditional expression indicates that $V_4^{(4)}$ is obtained when the operation $c_4^2$ is performed on $V_2^{(4)}$, $V_6^{(4)}$ is obtained when the operation $c_4$ is performed on $V_2^{(4)}$, and $V_8^{(4)}$ is obtained when the operation $c_4^3$ is performed on $V_2^{(4)}$. As a result, $V_4^{(4)}$, $V_6^{(4)}$, and $V_8^{(4)}$ may be designed from $V_2^{(4)}$ by using the second conditional expression.

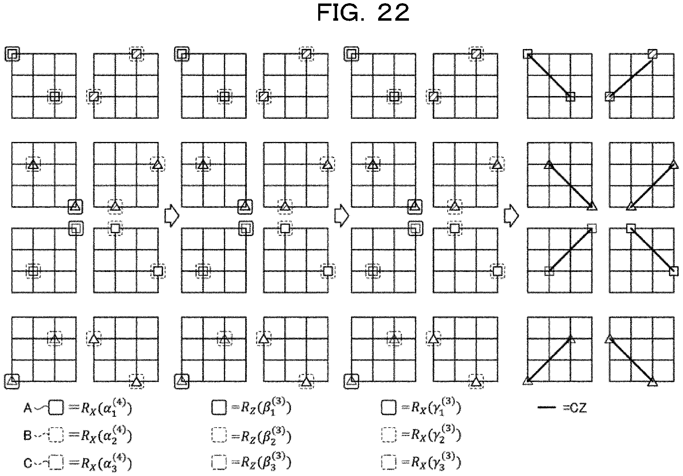

The unitary operation satisfying the conditional expression of each block group described above is illustrated in FIG. 22. For example, as illustrated in FIG. 22 with respect to each of the branches $Q_1^{(4)}$ to $Q_8^{(4)}$ in the fourth layer, each of the qubits A, qubits B, and qubits C is rotated around the X-axis by the X rotation gate at the same rotation angle, rotated around the Z-axis by the Z rotation gate, and further rotated around the X-axis by the X rotation gate, and then the control Z (CZ) gate is caused to act to connect adjacent qubits. Since such a series of operations satisfies the same transformation rule in the entire layer, it is a specific example satisfying the symmetry $D_4$.

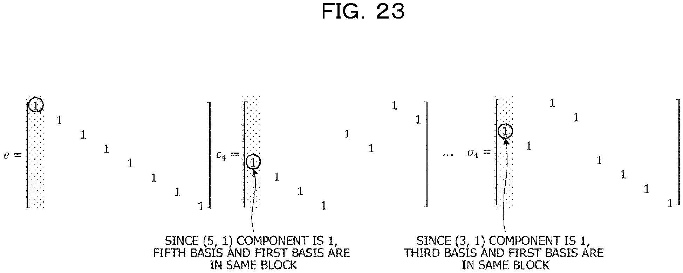

Here, an exemplary case where the circuit generation unit 21 determines whether or not the permutation matrix is block-diagonalized will be described. FIG. 23 is a diagram for explaining a method of determining the block diagonalization. Specifically, a necessary and sufficient condition for the state that the i-th basis and the j-th basis belong to the same block is that $g \in G$ in which the $(i, j)$ component is 1 exists in the permutation matrix $M^g$. With the bases being classified according to this determination criterion, the block diagonalization may be systematically carried out.

For example, describing with reference to FIG. 23, the basis belonging to the same block as the first basis may be found when the first column of all the permutation matrices is focused to confirm the row number in which the component is 1. That is, since the $(5, 1)$ component is 1, the fifth basis and the first basis belong to the same block, and since the $(3, 1)$ component is 1, the third basis and the first basis belong to the same block. Note that the method described here is an example, and a publicly known method or a method such as manual designation may be adopted.

(Performance Verification)

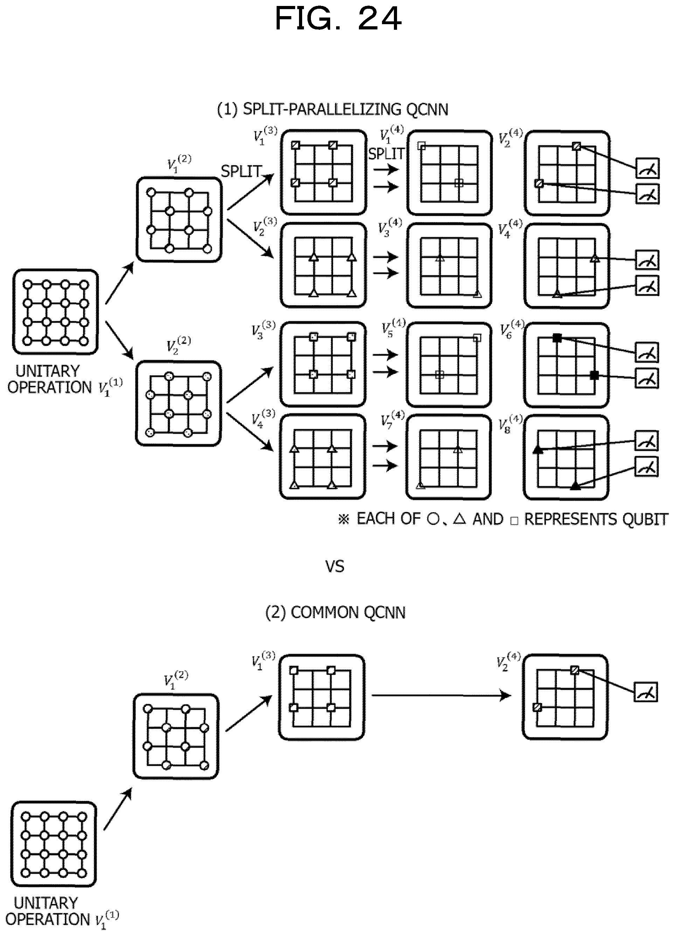

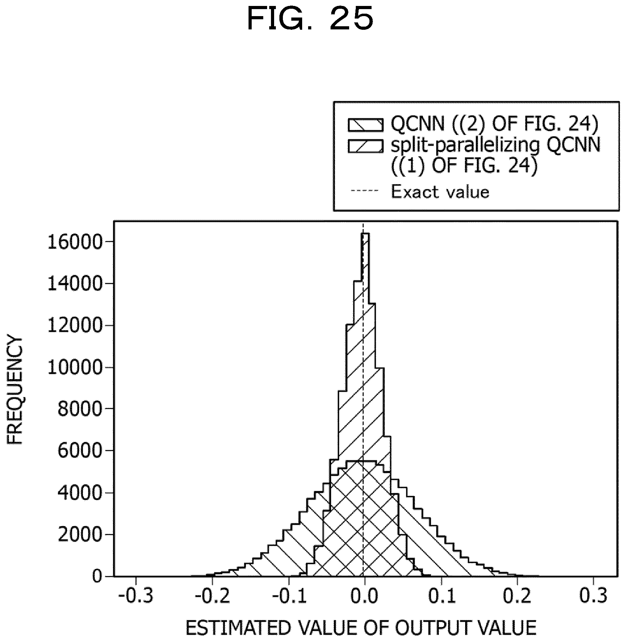

Next, a verification result of the performance of the split-parallelizing QCNN will be described with reference to FIGs. 24 and 25. FIGs. 24 and 25 are diagrams for explaining a verification result. Here, the performance of the split-parallelizing QCNN (see (1) of FIG. 24) designed using FIGs. 3 to 23 will be compared with the performance of a common QCNN (see (2) of FIG. 24) illustrated in FIG. 1 using a simulation result by a classical computer. Note that, it is assumed that the unitary operation is common, a parameter of a rotation gate is randomly initialized, eight qubits are finally measured by the calculation basis in the split-parallelizing QCNN, and one qubit is measured by the calculation basis in the common QCNN.

FIG. 25 illustrates a comparison result of efficiency in calculating an output when $D_4$ symmetric input data is input to each of the split-parallelizing QCNN and the common QCNN. Note that, as described above, in order to obtain an output of a quantum circuit, the same quantum circuit needs to be executed multiple times to take an average of the measured values. Furthermore, the input data is set in a graph state connected in the square lattice, the quantum circuit is executed for 200 shots to estimate an output of each QCNN from the average of the measured values, and the trial described above is performed 100,000 times to obtain a histogram of the estimated values of the output.

That is, the split-parallelizing QCNN may be regarded as effective parallelization of the common QCNN due to the circuit symmetry, and in this verification method, eight times more measured values may be obtained by using the split-parallelizing QCNN. Therefore, as illustrated in FIG. 25, variance of the estimated values is smaller in the split-parallelizing QCNN than in the common QCNN, that is, the measurement efficiency is higher. Furthermore, assuming that the histogram of FIG. 25 follows the Gaussian distribution expressed by the formula (10), (standard deviation of common QCNN/split-parallelizing QCNN)$^2$ = (peak height 16,451 of split-parallelizing QCNN/peak height 5,598 of common QCNN)$^2 \approx 8.6$ holds. Thus, considering the standard deviation ($\approx$ "$1/\sqrt{}$ number of shots"), the number of shots needed may be reduced by a factor of "1/8.6" according to the split-parallelizing QCNN.

[Math. 10]

$$\text{Gaussian distribution } \left(-\frac{(x-\mu)^2}{2\sigma^2}\right) / \sqrt{\sqrt{2\pi\sigma^2}} \qquad \cdots (10)$$

(Application Examples)

An application example will be described in which the split-parallelizing QCNN designed and generated by the process described above exerts more effects. For example, there is a case where the input data itself, which corresponds to the case of the numerical verification described with reference to FIGs. 24 and 25, has the symmetry G. In this case, measurement expected values of some qubits are equal due to the symmetry of the input data and quantum circuit, whereby the split-parallelizing QCNN may be regarded as effective parallelization of the common QCNN, which improves the measurement efficiency.

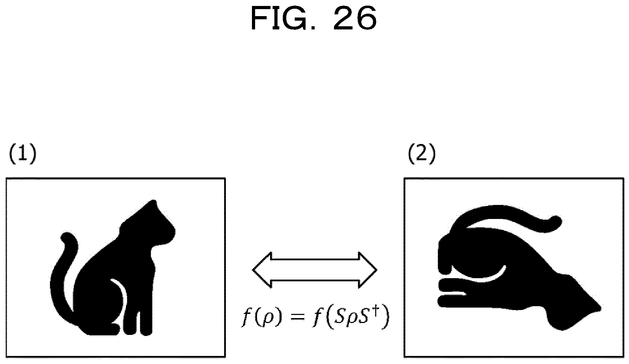

Furthermore, there is a case where the task has the symmetry G while the data itself does not have the symmetry G. When the task is symmetric, for example, in a task of determining whether a given image represents a cat, an output result is not to be changed even if the entire image is rotated. FIG. 26 is a diagram for explaining rotational symmetry of a task. Since the diagrams illustrated in FIG. 26 are both image data of a cat, both pieces of the data need to have the same prediction result while the orientation is changed. In this sense, this task has rotational symmetry. Specifically, it is a task satisfying "f($\rho$) = f(S$\rho$S$^\dagger$)" when f represents an output function of a quantum neural network (QNN), $\rho$ represents input quantum data, and S represents a symmetry operation.

Such a QNN in which the symmetry is incorporated in advance is called an equivariant QNN. It is known that the parameter space to be searched is reduced by the symmetry incorporated in advance, and that the equivariant QNN exhibits higher trainability and generalization performance than a common QNN. Since the split-parallelizing QCNN has properties similar to those of the equivariant QNN, it may be applied to such a task.

Furthermore, as usage other than the quantum machine learning, it may also be used as an ansatz circuit of a variational quantum eigensolver or the like. In this case, the circuit of the split-parallelizing QCNN may also be used as a quantum circuit ansatz for generating a variational quantum state having the symmetry G.

(Effects)

As described above, the information processing device 10 according to the first embodiment breaks down and considers the split-parallelizing QCNN as two elements of the circuit splitting the unitary operation, and constructs a general configuration method for satisfying symmetry for each of the two elements. As a result, a generalized construction method for the split-parallelizing QCNN applicable to data and tasks having any spatial symmetry may be provided.

With the split-parallelizing QCNN generated by the information processing device 10 according to the first embodiment, the split-parallelizing QCNN may be applied to data and tasks having any spatial symmetry. As a result, the efficiency in calculation and the accuracy in training for data and tasks having any spatial symmetry may be improved.

[Second Embodiment]

Incidentally, although the embodiment has been described above, the embodiment may be implemented in various different modes in addition to the embodiment described above.

(Numerical Values, etc.)

Numerical values, graphs, and the like used in the embodiment described above are merely examples, and may be optionally changed. Furthermore, the flows of the processes described in the individual flowcharts may be appropriately changed unless otherwise contradicted.

(System)

Pieces of information including a processing procedure, a control procedure, a specific name, various types of data, and parameters described above or illustrated in the drawings may be optionally changed unless otherwise specified.

Furthermore, specific forms of distribution and integration of components of individual devices are not limited to those illustrated in the drawings. For example, the circuit generation unit 21 and the training unit 22 may be integrated. In other words, all or some of the components may be functionally or physically separated or integrated in any units depending on various types of loads, use situations, or the like. Moreover, all or any part of the individual processing functions of each device may be implemented by a central processing unit (CPU) and a program analyzed and executed by the CPU, or may be implemented as hardware by wired logic.

Moreover, all or any part of the individual processing functions performed in each device may be implemented by a CPU and a program analyzed and executed by the CPU, or may be implemented as hardware by wired logic.

(Hardware)

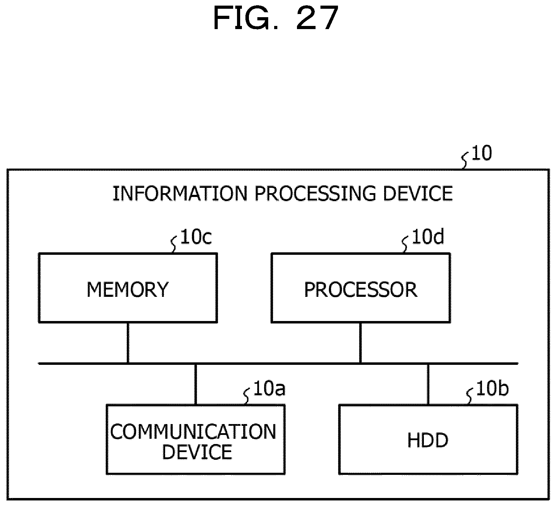

FIG. 27 is a diagram for explaining an exemplary hardware configuration. As illustrated in FIG. 27, the information processing device 10 includes a communication device 10a, a hard disk drive (HDD) 10b, a memory 10c, and a processor 10d. Furthermore, the respective units illustrated in FIG. 27 coupled to each other by a bus or the like.

The communication device 10a is a network interface card or the like, and communicates with another device. The HDD 10b stores programs and databases (DBs) for operating the functions illustrated in FIG. 4.

The processor 10d reads, from the HDD 10b or the like, programs for executing processing similar to that of the respective processing units illustrated in FIG. 4, and loads them into the memory 10c, thereby operating the process for executing the respective functions described with reference to FIG. 4 and the like. For example, this process implements functions similar to those of the respective processing units included in the information processing device 10. Specifically, the processor 10d reads, from the HDD 10b or the like, programs having functions similar to those of the circuit generation unit 21, the training unit 22, the prediction unit 23, and the like. Then, the processor 10d executes a process for executing processing similar to that of the circuit generation unit 21, the training unit 22, the prediction unit 23, and the like.

As described above, the information processing device 10 operates as an information processing device that executes a circuit design method by reading and executing the programs. Furthermore, the information processing device 10 may also implement the functions similar to those in the embodiments described above by reading, using a medium reading device, the programs described above from a recording medium and executing the read programs described above. Note that the program referred to in another embodiment is not limited to being executed by the information processing device 10. For example, the embodiments described above may be similarly applied to a case where another computer or server executes the program or a case where those computer and server cooperatively execute the program.

This program may be distributed via a network such as the Internet. Furthermore, this program may be recorded in a computer-readable recording medium such as a hard disk, a flexible disk (FD), a compact disc read only memory (CD-ROM), a magneto-optical disk (MO), a digital versatile disc (DVD), or the like, and may be executed by being read from the recording medium by a computer.

**Claims**

1. A generation program for causing a computer to execute a process comprising:

    determining, when any group operation is performed on each of a plurality of subsets obtained by splitting a collection of qubits, a splitting method such that a configuration of the plurality of subsets is invariant or mutually interchanged in an entire layer that includes the plurality of subsets;
    determining a unitary operation that satisfies a same transformation rule in the entire layer as a unitary operation that acts on each of the plurality of subsets split by the determined splitting method; and
    generating a quantum circuit by causing the unitary operation to act on each of the plurality of subsets split by the splitting method.

2. The generation program according to claim 1, wherein
    the determining the unitary operation is configured to:
    determine the unitary operation for second and subsequent layers split from a first layer to which a quantum state of each of the plurality of qubits is input using a permutation matrix that is a matrix that represents the transformation rule of permutation of the plurality of subsets with a number of the subsets after the splitting as a dimension.

3. The generation program according to claim 2, wherein
    the determining the unitary operation is configured to:

    extract, using the permutation matrix, respective group operations for the qubits that belong to a first subset and a second subset with respect to respective bases, with a first unitary operator and a second unitary operator caused to act on the first subset and the second subset that belong to a first layer, respectively, as the respective bases;
    determine the first unitary operator that satisfies specific symmetry based on the respective extracted group operations represented by using the permutation matrix; and
    determine the second unitary operator from the first unitary operator based on the determined first unitary operator and the respective group operations represented by using the permutation matrix.

4. The generation program according to claim 2 or claim 3, wherein
the determining the unitary operation is configured to:

determine whether or not the plurality of subsets split by the splitting method is block-diagonalized;
when the plurality of subsets is not block-diagonalized, generate a plurality of block groups in which respective bases are rearranged and block-diagonalized, with respective unitary operators caused to act on the plurality of respective subsets as the respective bases; and
determine, for each of the plurality of block groups, the unitary operation that satisfies the same transformation rule in the entire block group as the unitary operation that acts on each of the plurality of subsets that belongs to the block group.

5. A generation method implemented by a computer, the generation method comprising:

determining, when any group operation is performed on each of a plurality of subsets obtained by splitting a collection of qubits, a splitting method such that a configuration of the plurality of subsets is invariant or mutually interchanged in an entire layer that includes the plurality of subsets;
determining a unitary operation that satisfies a same transformation rule in the entire layer as a unitary operation that acts on each of the plurality of subsets split by the determined splitting method; and
generating a quantum circuit by causing the unitary operation to act on each of the plurality of subsets split by the splitting method.

6. An information processing device comprising:

a control unit configured to
determine, when any group operation is performed on each of a plurality of subsets obtained by splitting a collection of qubits, a splitting method such that a configuration of the plurality of subsets is invariant or mutually interchanged in an entire layer that includes the plurality of subsets;
determine a unitary operation that satisfies a same transformation rule in the entire layer as a unitary operation that acts on each of the plurality of subsets split by the determined splitting method; and
generate a quantum circuit by causing the unitary operation to act on each of the plurality of subsets split by the splitting method.

FIG. 1

# FIG. 2

# FIG. 3

INFORMATION PROCESSING DEVICE — S10

START

PREREQUISITE KNOWLEDGE: SYMMETRY G OF DATA AND TASK — S1

(FIRST CONDITION) DETERMINE SPLITTING METHOD OF QUANTUM CIRCUIT BASED ON SYMMETRY G — S2

(SECOND CONDITION) DETERMINE UNITARY OPERATION IN EACH LAYER OF QUANTUM CIRCUIT BASED ON SYMMETRY G AND CIRCUIT SPLITTING METHOD — S3

PERFORM TRAINING OF TRAINING DATA USING DESIGNED SPLIT-PARALLELIZING QCNN — S4

PERFORM PREDICTION WITH RESPECT TO UNKNOWN DATA USING TRAINED SPLIT-PARALLELIZING QCNN — S5

END

# FIG. 4

INFORMATION PROCESSING DEVICE 10

COMMUNICATION UNIT 11

CONTROL UNIT 20

CIRCUIT GENERATION UNIT 21

TRAINING UNIT 22

PREDICTION UNIT 23

STORAGE UNIT 12

QUANTUM CIRCUIT INFORMATION 13

QUANTUM STATE INFORMATION 14

# FIG. 5

# FIG. 6

DESIGNING OF SPLIT-PARALLELIZING QCNN SUCH THAT EACH LAYER OF SPLIT-PARALLELIZING QCNN HAS SYMMETRY G:

$$\left[V^{(d)}, U_g\right] = 0, \forall g \in G$$

HERE, $U_g$ IS UNITARY REPRESENTATION OF $g$

DETAILED

## FIRST CONDITION (CONDITION ON CIRCUIT SPLITTING)

COLLECTION $\{Q_i^{(d)}\}_i$ IS INVARIANT WITH RESPECT TO ACTION OF $\forall g \in G$

AT THAT TIME, $g(Q_i^{(d)}) = \sum_j M_{ji}^g Q_j^{(d)}$ ...FORMULA (A) MAY BE WRITTEN USING PERMUTATION MATRIX $M^g$ ( $M^g$ IS PERMUTATION REPRESENTATION OF $g$ )

## SECOND CONDITION (CONDITION ON UNITARY OPERATION APPLIED TO EACH BRANCH)

$$U_g V_i^{(d)} U_g^\dagger = \sum_j M_{ji}^g V_j^{(d)} \text{ IS SATISFIED}$$

# FIG. 7

$$D_4 = \{e, c_4, c_4^2, c_4^3, \sigma_1, \sigma_2, \sigma_3, \sigma_4\}$$

MATRIX REPRESENTATION OF EACH GROUP OPERATION

$$e = \begin{bmatrix} 1 & \\ & 1 \end{bmatrix} \quad c_4 = \begin{bmatrix} & 1 \\ 1 & \end{bmatrix} \quad c_4^2 = \begin{bmatrix} 1 & \\ & 1 \end{bmatrix} \quad c_4^3 = \begin{bmatrix} & 1 \\ 1 & \end{bmatrix} \quad \sigma_1 = \begin{bmatrix} & 1 \\ 1 & \end{bmatrix} \quad \sigma_2 = \begin{bmatrix} & 1 \\ 1 & \end{bmatrix} \quad \sigma_3 = \begin{bmatrix} 1 & \\ & 1 \end{bmatrix} \quad \sigma_4 = \begin{bmatrix} 1 & \\ & 1 \end{bmatrix}$$

# FIG. 8

START

S101

SET ONLY BRANCH $Q_1^{(1)}$ OF FIRST LAYER AS ENTIRE QUBITS

S102

LOOP d = 1 TO L-1 (L IS NUMBER OF LAYERS)

S103

SPLIT EACH BRANCH $Q_i^{(d)}$ OF d-TH LAYER INTO PLURALITY OF BRANCHES TO GENERATE BRANCH $Q_i^{(d+1)}$ OF d+1-TH LAYER
AT THAT TIME, SET MANNER OF DIVIDING QUBITS OF d+1-TH LAYER TO BE INVARIANT WITH RESPECT TO ANY OPERATION $g \in G$

S104

LOOP d = 1 TO L-1 (L IS NUMBER OF LAYERS)

END

# FIG. 9

# FIG. 10

$$P \rightarrow \mathcal{T}(P) = \frac{1}{|G|} \sum_{g \in G} U_g P U_g^\dagger$$

$R_{X \otimes I}$

TWIRLING

$R_{(X \otimes I + I \otimes X)/2}$

# FIG. 11

START

$\quad\quad$ S201

CALCULATE REPRESENTATION MATRIX $M^g$ OF ACTION OF OPERATION $g \in G$ WITH RESPECT TO EACH BRANCH $Q_i^{(d)}$ OF d-TH LAYER

$\quad\quad$ S202

INTERCHANGE ORDER OF EACH BRANCH $Q_i^{(d)}$ TO PERFORM SIMULTANEOUS BLOCK DIAGONALIZATION OF $M^g$
AT THAT TIME, SET TOTAL NUMBER OF BLOCKS AS B AND $M^{(g,b)}$
AS b-TH $d_b \times d_b$ BLOCK MATRIX
ASSUME THAT EACH BLOCK MAY NOT BE FURTHER SUBJECT TO BLOCK DIAGONALIZATION

$\quad\quad$ S203

LOOP b = 1 TO B

$\quad\quad$ S204

SET AGAIN VARIATION UNITARY OPERATOR APPLIED TO BRANCH CORRESPONDING TO i-TH BASIS OF BLOCK $M^{(g,b)}$ AS $V_i^{(d,b)}$ (i = 1, ..., $d_b$)

$\quad\quad$ S205

RETRIEVE ALL g IN WHICH (1, 1) COMPONENT OF BLOCK $M^{(g,b)}$ IS 1, AND DEFINE SYMMETRY G′ = {g ∈ G|$(M^{(g,b)})_{11}$ = 1} USING g

$\quad\quad$ S206

DESIGN VARIATION UNITARY OPERATOR $V_1^{(d,b)}$ APPLIED TO FIRST BASIS OF BLOCK $M^{(g,b)}$ TO HAVE SYMMETRY G′ BY TWIRLING TECHNIQUE ETC.

$\quad\quad$ S207

LOOP j = 2 TO $d_b$

$\quad\quad$ S208

RETRIEVE AND SET ONE g IN WHICH (j, 1) COMPONENT OF BLOCK $M^{(g,b)}$ IS 1 AS $g_j$
DEFINE VARIATION UNITARY OPERATOR $V_j^{(d,b)}$ APPLIED TO j-TH BASIS OF BLOCK $M^{(g,b)}$ by $V_j^{(d,b)} = U_{gj} V_1^{(d,b)} U_{gj}^\dagger$

$\quad\quad$ S209

LOOP j = 2 TO $d_b$

$\quad\quad$ S210

LOOP b = 1 TO B

END

# FIG. 12

※ EACH OF ○、△ AND □ REPRESENTS QUBIT

# FIG. 13

# FIG. 14

A $\sim\square$ $=R_X(\alpha_1^{(1)})$   $\square=R_Z(\beta_1^{(1)})$   $\square=R_X(\gamma_1^{(1)})$   $\underline{\quad\quad}=CZ$

B $\sim\square$ $=R_X(\alpha_2^{(1)})$   $\square=R_Z(\beta_2^{(1)})$   $\square=R_X(\gamma_2^{(1)})$

C $\sim\square$ $=R_X(\alpha_3^{(1)})$   $\square=R_Z(\beta_3^{(1)})$   $\square=R_X(\gamma_3^{(1)})$

# FIG. 15

$$e = \begin{bmatrix} ① & \\ & 1 \end{bmatrix} c_4 = \begin{bmatrix} & 1 \\ ① & \end{bmatrix} c_4^2 = \begin{bmatrix} ① & \\ & 1 \end{bmatrix} c_4^3 = \begin{bmatrix} & 1 \\ 1 & \end{bmatrix} \sigma_1 = \begin{bmatrix} & 1 \\ 1 & \end{bmatrix} \sigma_2 = \begin{bmatrix} & 1 \\ 1 & \end{bmatrix} \sigma_3 = \begin{bmatrix} ① & \\ & 1 \end{bmatrix} \sigma_4 = \begin{bmatrix} ① & \\ & 1 \end{bmatrix}$$

# FIG. 16

$A \sim \Box = R_X(\alpha_1^{(2)})$    $\Box = R_Z(\beta_1^{(2)})$    $\Box = R_X(\gamma_1^{(2)})$    $— = CZ$

$B \sim \Box = R_X(\alpha_2^{(2)})$    $\Box = R_Z(\beta_2^{(2)})$    $\Box = R_X(\gamma_2^{(2)})$

$C \sim \Box = R_X(\alpha_3^{(2)})$    $\Box = R_Z(\beta_3^{(2)})$    $\Box = R_X(\gamma_3^{(2)})$

# FIG. 17

FIG. 18

A~□ $= R_X(\alpha_1^{(3)})$    □ $= R_Z(\beta_1^{(3)})$    □ $= R_X(\gamma_1^{(3)})$    — $= CZ$

B~□ $= R_X(\alpha_2^{(3)})$    □ $= R_Z(\beta_2^{(3)})$    □ $= R_X(\gamma_2^{(3)})$

C~□ $= R_X(\alpha_3^{(3)})$    □ $= R_Z(\beta_3^{(3)})$    □ $= R_X(\gamma_3^{(3)})$

FIG. 19

FIG. 20

# FIG. 21

BLOCK GROUP D1

BLOCK GROUP D2

# FIG. 22

$A \sim \square = R_X(\alpha_1^{(4)})$  $\square = R_Z(\beta_1^{(3)})$  $\square = R_X(\gamma_1^{(3)})$  $\longrightarrow = CZ$

$B \cdots \square = R_X(\alpha_2^{(4)})$  $\square = R_Z(\beta_2^{(3)})$  $\square = R_X(\gamma_2^{(3)})$

$C \cdots \square = R_X(\alpha_3^{(4)})$  $\square = R_Z(\beta_3^{(3)})$  $\square = R_X(\gamma_3^{(3)})$

# FIG. 23

SINCE (5, 1) COMPONENT IS 1,
FIFTH BASIS AND FIRST BASIS ARE
IN SAME BLOCK

SINCE (3, 1) COMPONENT IS 1,
THIRD BASIS AND FIRST BASIS ARE
IN SAME BLOCK

# FIG. 24

(1) SPLIT-PARALLELIZING QCNN

※ EACH OF ○、△ AND □ REPRESENTS QUBIT

VS

(2) COMMON QCNN

# FIG. 25

# FIG. 26

(1)

(2)

$$f(\rho) = f(S\rho S^{\dagger})$$

# FIG. 27

INFORMATION PROCESSING DEVICE  10

MEMORY  10c

PROCESSOR  10d

COMMUNICATION DEVICE  10a

HDD  10b

Europäisches
Patentamt

European
Patent Office

Office européen
des brevets

## EUROPEAN SEARCH REPORT

**Application Number**

EP 25 15 7168

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/287761 A1 (CAMPS JOAN [GB] ET AL) 16 September 2021 (2021-09-16) * abstract * * page 0003 - page 0170 * | 1-6 | INV. G06N10/20 G06N10/60 |
| X | Mansky Maximilian Balthasar ET AL: "Permutation-invariant quantum circuits", arXiv.org, 22 December 2023 (2023-12-22), XP093291017, Retrieved from the Internet: URL:https://arxiv.org/pdf/2312.14909 [retrieved on 2025-06-30] * abstract * * page 1 - page 9 * | 1-6 | |

**TECHNICAL FIELDS SEARCHED (IPC)**

G06N

The present search report has been drawn up for all claims

| Place of search | Date of completion of the search | Examiner |
|---|---|---|
| The Hague | 10 July 2025 | Tsakonas, Athanasios |

EPO FORM 1503 03.82 (P04C01)

## ANNEX TO THE EUROPEAN SEARCH REPORT
## ON EUROPEAN PATENT APPLICATION NO.

EP 25 15 7168

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2025

| Patent document cited in search report | Publication date | Patent family member(s) | Publication date |
|---|---|---|---|
| US 2021287761 A1 | 16-09-2021 | EP 4078471 A1<br>US 2021287761 A1<br>WO 2021181082 A1 | 26-10-2022<br>16-09-2021<br>16-09-2021 |

EPO FORM P0459

For more details about this annex : see Official Journal of the European Patent Office, No. 12/82

**REFERENCES CITED IN THE DESCRIPTION**

**Patent documents cited in the description**

- JP 2019096334 A
- JP 2022509841 A
- US 20220101164
- US 20220253741